# EUROPÄISCHE PATENTSCHRIFT

(11) **EP 1 485 693 B1**
(45) Veröffentlichungstag und Bekanntmachung des Hinweises auf die Patenterteilung: **24.03.2010**
(21) Anmeldenummer: 02774403.6
(22) Anmeldetag: 24.09.2002
(51) Int. Cl.: G01L 27/00

(54) **VERFAHREN ZUR ÜBERPRÜFUNG DER FUNKTIONSFÄHIGKEIT EINES DRUCKSENSORS**
METHOD FOR CHECKING THE OPERABILITY OF A PRESSURE SENSOR
PROCEDE POUR CONTROLER LE FONCTIONNEMENT D'UN CAPTEUR DE PRESSION

(30) Priorität: 13.03.2002 DE 10210925
(43) Veröffentlichungstag der Anmeldung: 15.12.2004
(73) Patentinhaber: ROBERT BOSCH GMBH, 70442 Stuttgart (DE)
(72) Erfinder: HERRMANN, Thomas, 74613 Oehringen (DE); BALZER, Knut, 71717 Beilstein (DE)
(86) Internationale Anmeldenummer: PCT/DE2002/003605
(87) Internationale Veröffentlichungsnummer: WO 2003/078954

(56) Entgegenhaltungen:
- EP-A- 0 393 730
- DE-C- 19 608 180
- US-A- 4 653 280
- PATENT ABSTRACTS OF JAPAN vol. 017, no. 450 (E-1416), 18. August 1993 (1993-08-18) & JP 05 102088 A (NEC YAMAGUCHI LTD), 23. April 1993 (1993-04-23)

## Beschreibung

### Stand der Technik

Die Erfindung betrifft ein Verfahren zur Überprüfung der Funktionsfähigkeit eines Drucksensors, der den Luftdruck innerhalb eines Karosserieteils eines Fahrzeugs erfasst, wobei das Fahrzeug mindestens einen weiteren Drucksensor zur Erfassung des Luftdrucks umfasst.

Drucksensoren, insbesondere mikromechanische Drucksensoren, werden in der Fahrzeugtechnik unter anderem im Bereich Insassenschutz eingesetzt. Eine Drucksensierung an den Fahrzeugseiten wird beispielsweise oftmals zusätzlich zu einer Beschleunigungssensierung in y-Richtung vorgenommen, um einen Seitenaufprall zu erkennen und zu entscheiden, ob Rückhaltemittel ausgelöst werden sollen. Dazu sind in den Fahrzeugtüren Drucksensoren angeordnet, die im eingeschwungenen Zustand, d.h. im Normalzustand, den Luftdruck der Umgebung p0 erfassen. Dieser hängt einerseits vom Wetter und andererseits vom jeweiligen Niveau über NN (Meeresspiegel) ab. Ein Seitenaufprall, bei dem die Fahrzeugtür verformt wird, ist - je nach Stärke des Aufpralls - mit einem schnellen Druckanstieg Δp = p1 - p0 verbunden.

Wie bereits erwähnt, werden in der Praxis häufig Drucksensoren mit mikromechanischen Sensorelementen eingesetzt. Die Membran eines derartigen Sensors kann in der Regel nur dann als defekt diagnostiziert werden, wenn sie vollkommen zerstört ist. Kleinere Schädigungen, wie z.B. Kratzer an der Oberfläche oder Risse in der Membran, können derzeit nur mit zusätzlichen Hilfseinrichtungen erkannt werden.

Aus DE 196 08 180 C1 ist es bekannt, Luftdrucksensoren zur Seitenaufprallerkennung zu verwenden. Dabei kann bei einem Aktivieren eines Frontairbags ein solcher Luftdrucksensor ein solches Luftdrucksignal im Seitenteil eines Fahrzeugs erhalten, dass die Seitenairbags ebenfalls ausgelöst werden. Dies wird dadurch vermieden, dass bei der Auslösung zumindest eines Frontairbags zeitweise der Schwellwert für die Auslösung des Seitenairbags gegenüber einem Normalwert erhöht wird.

### Vorteile der Erfindung

Mit der vorliegenden Erfindung wird ein Verfahren zur Überprüfung der Funktionsfähigkeit eines Drucksensors vorgeschlagen, mit dem auf die Integrität des Sensors geschlossen werden kann, ohne dass dafür zusätzliche Hilfseinrichtungen benötigt werden. So kann mit Hilfe des erfindungsgemäßen Verfahrens die Leistungsfähigkeit der Selbstdiagnose eines Insassenschutzsystems ohne Mehrkosten verbessert werden.

Dies wird erfindungsgemäß dadurch erreicht, dass die Messwerte des Drucksensors und die Messwerte des mindestens einen weiteren Drucksensors über einen definierten Beobachtungszeitraum miteinander verglichen werden und dass der Drucksensor als defekt erkannt wird, wenn seine Messwerte über ein vorgegebenes Maß von den Messwerten des mindestens einen weiteren Drucksensors abweichen.

Die Erfindung macht sich zu Nutze, dass in einem Kraftfahrzeug in der Regel mehrere Drucksensoren verbaut sind, die im wesentlichen den Luftdruck der Umgebung erfassen. So umfasst beispielsweise das voranstehend beschriebene Insassenschutzsystem für einen Seitenaufprall je nach Anzahl der Fahrzeugtüren bereits mindestens zwei oder vier Drucksensoren, die in den Fahrzeugtüren angeordnet sind und im Normalzustand den Luftdruck der Umgebung erfassen. Weitere Drucksensoren können beispielsweise für die Motorsteuerung, für die Klimaregelung des Fahrzeuginnenraums und/oder auch für eine Kfz-Wetterstation vorgesehen sein. Diese Redundanz der Luftdruckerfassung wird erfindungsgemäß ausgenutzt, um auf die Integrität, d.h. Funktionsfähigkeit, eines Sensors bzw. aller an einem Messwertvergleich beteiligten Sensoren zu schließen. Wesentlich ist, dass die Messwerte mehrerer Drucksensoren über einen definierten Beobachtungszeitraum miteinander verglichen werden und ein Drucksensor nur dann als defekt erkannt wird, wenn seine Messwerte über ein vorgegebenes Maß von den Messwerten der übrigen am Messwertvergleich beteiligten Drucksensoren abweichen. Dadurch haben singuläre Ereignisse, wie z.B. ein Seitenaufprall, keinen Einfluss auf die erfindungsgemäße Funktionsüberprüfung, die kontinuierlich, quasi im Hintergrund erfolgt.

Zur Durchführung des erfindungsgemäßen Verfahrens ist mindestens ein weiterer Drucksensor erforderlich, dessen Messwerte mit denen des zu überprüfenden Drucksensors verglichen werden. An dieser Stelle sei jedoch nochmals ausdrücklich darauf eingewiesen, dass alle am Messwertvergleich beteiligten Drucksensoren hinsichtlich der Überprüfung ihrer Funktionsfähigkeit gleichwertig sind, d.h. dass im Rahmen des Messwertvergleichs alle beteiligten Drucksensoren überprüft werden können und gleichzeitig auch alle beteiligten Drucksensoren als Referenzsensoren dienen können. Dementsprechend wird der Defekt eines Sensors um so sicherer erkannt, je größer die Anzahl der am Messwertvergleich beteiligten Drucksensoren und damit die Redundanz bei der Luftdruckerfassung ist. Wie voranstehend bereits erwähnt, können die einzelnen am Messwertvergleich beteiligten Drucksensoren einem System, wie z.B. dem Insassenschutz, zuzuordnen sein oder auch ganz unterschiedlichen Systemen.

Das erfindungsgemäße Verfahren kann in vorteilhafter Weise zur Überprüfung der Funktionsfähigkeit eines Drucksensors eingesetzt werden, der zur Erkennung eines Seitenaufpralls dient und dazu in der entsprechenden Fahrzeugtür angeordnet ist. In vorteilhafter Weise erfolgt der Messwertvergleich hier mit einem Drucksensor, der ebenfalls zur Erkennung eines Seitenaufpralls dient und dazu ebenfalls in einer Fahrzeugtür angeordnet ist Die Anordnung der beiden Vergleichssensoren innerhalb von Karosserieteilen bietet in jedem Fall einen guten Schutz gegen mechanische Störeinflüsse.

In einer vorteilhaften Weiterbildung des erfindungsgemäßen Verfahrens zur Überprüfung der Funktionsfähigkeit eines Drucksensors, der zum Erkennen von Fahrzeugkollisionen dient, wird die Entscheidung über das Auslösen von Rückhaltemitteln unabhängig von den Messwerten des Drucksensors durchgeführt, wenn der Drucksensor als defekt erkannt worden ist. Auf diese Weise kann zumindest ein gewisser Insassenschutz gewährleistet werden.

Als besonders vorteilhaft erweist es sich, wenn die Messwerte des Drucksensors, dessen Funktionsfähigkeit mit Hilfe des erfindungsgemäßen Verfahrens überprüft wird, mehrfach - also im Rahmen mehrerer Fahrzeugsysteme - genutzt werden. So kann der im Rahmen des insassenschutzes kontinuierlich erfasste Umgebungsluftdruck beispielsweise auch im Fahrer-Informationssystem angezeigt werden. Ggf. können Informationen über den Umgebungsluftdruck auch zur Optimierung der Klimaregelung des Fahrzeuginnenraums genutzt werden oder zur Realisierung einer Kfz-Wetterstation.

### Zeichnung

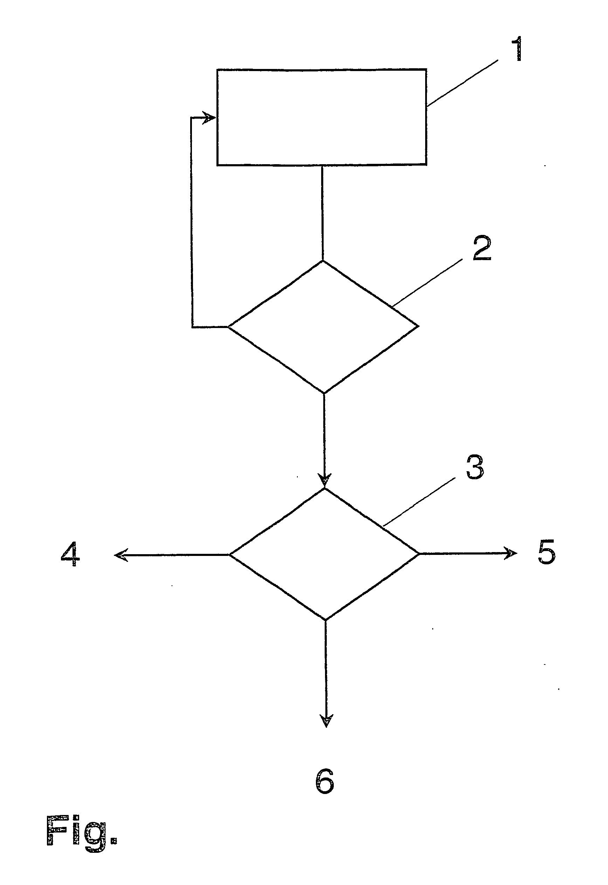

Wie bereits voranstehend erörtert, gibt es verschiedene Möglichkeiten, die Lehre der vorliegenden Erfindung in vorteilhafter Weise auszugestalten und weiterzubilden. Dazu wird einerseits auf die dem Patentanspruch 1 nachgeordneten Patentansprüche und andererseits auf die nachfolgende Beschreibung eines Ausführungsbeispiels der Erfindung anhand der Zeichnung verwiesen.

Die einzige Figur zeigt das Flussdiagramm einer möglichen Variante des erfindungsgemäßen Verfahrens.

### Beschreibung eines Ausführungsbeispiels

Ein Kraftfahrzeug ist mit einer Beschleunigungssensierung in y-Richtung und mit je einem Drucksensor S1 und S2 auf jeder Seite zur Erkennung eines Seitenaufpralls ausgestattet. Die Drucksensoren S1 und S2 sind in den Fahrzeugtüren angeordnet, so dass sie im Normalzustand den Luftdruck der Umgebung p0 erfassen. Ein Seitenaufprall, bei dem die jeweilige Tür verformt wird, ist je nach Stärke mit einem schnellen Druckanstieg Δp = p1 - p0 von ca. 100 mbar innerhalb von 3 ms verbunden. Der Luftdruck der Umgebung p0 ist abhängig vom jeweiligen Wetter und dem Niveau über NN (Meeresspiegel).

Bei 1 des in der einzigen Figur dargestellten Flussdiagramms werden die Messwerte p0S1 und p0S2 der beiden Drucksensoren S1 und S2 - rechte/linke Fahrzeugseite - über einen definierten Beobachtungszeitraum miteinander verglichen, um auf die Integrität der jeweiligen Sensoren S1 und S2 zu schließen. Dazu können die Messwerte p0S1 und p0S2 beispielsweise alle 250ms miteinander verglichen werden. Bei 2 wird geprüft, ob die im Beobachtungszeitraum erfassten Messwerte p0S1 und p0S2 über ein vorgegebenes Maß voneinander abweichen. Ist dies nicht der Fall, so wird der bei 1 vorgenommene Vergleich für den nächsten Beobachtungszeitraum durchgeführt. Weichen die Messwerte p0S1 und p0S2 der beiden Drucksensoren S1 und S2 aber über das vorgegebene Maß voneinander ab, so ist davon auszugehen, dass zumindest einer der beiden Drucksensoren in seiner Funktionsfähigkeit gestört ist.

Über die Änderungen des Umgebungsluftdrucks im Beobachtungszeitraum kann auf die Identität des defekten Sensorelements geschlossen werden. Dazu wird bei 3 geprüft, ob die Messwerte p0S1 und/oder p0S2 im Beobachtungszeitraum konstant geblieben sind. Unterlagen beispielsweise die Messwerte des Drucksensors S2 den normalen, beispielsweise wetterbedingten Schwankungen, während die Messwerte des Drucksensors S1 konstant geblieben sind, so kann davon ausgegangen werden, dass die Funktionsfähigkeit des Drucksensors S1 gestört ist. In diesem Fall kann bei 4 bzw. bei 5, wenn die Verhältnisse umgekehrt waren und also der Drucksensor S2 gestört ist, zumindest eine entsprechende Warnung ausgegeben werden. Zusätzlich kann für die betroffene Seite ein minimaler Aufprallschutz aufrechterhalten werden, indem die Rückhaltemittel hier ohne Berücksichtigung der Drucksensierung sondern nur aufgrund der Beschleunigungssensierung in y-Richtung aktiviert werden. Waren die Messwerte beider Drucksensoren während des Beobachtungszeitraums konstant oder unterlagen beide Messwerte unterschiedlichen Schwankungen, so können keine konkreten Aussagen über die Funktionsfähigkeit der einzelnen Drucksensoren S1 und S2 gemacht werden. In diesem Fall müssen bei 6 weitere Prüfmaßnahmen getroffen werden.

## Patentansprüche

1. Verfahren zur Überprüfung der Funktionsfähigkeit eines Drucksensors, der zur Erkennung eines Seitenaufpralls verwendet wird, der den Luftdruck innerhalb eines Karosserieteils eines Fahrzeugs erfasst, wobei das Fahrzeug mindestens einen weiteren Drucksensor zur Erfassung des Luftdrucks umfasst, **dadurch gekennzeichnet, dass** die Messwerte des Drucksensors und die Messwerte des mindestens einen weiteren Drucksensors über einen definierten Beobachtungszeitraum miteinander verglichen werden und dass der Drucksensor als defekt erkannt wird, wenn seine Messwerte über ein vorgegebenes Maß von den Messwerten des mindestens einen weiteren Drucksensors abweichen, dass die Überprüfung kontinuierlich erfolgt.

2. Verfahren zur Überprüfung der Funktionsfähigkeit eines in einer Fahrzeugtür angeordneten Drucksensors zur Erkennung des Seitenaufpralls nach Anspruch 1, **dadurch gekennzeichnet, dass** der weitere Drucksensor in einem anderen Karosserieteil angeordnet ist.

3. Verfahren nach Anspruch 2, **dadurch gekennzeichnet, dass** der weitere Drucksensor in einer weiteren Fahrzeugtür auf der gleichen oder der anderen Fahrzeugseite angeordnet ist.

4. Verfahren nach einem der Ansprüche 1 bis 3, **dadurch gekennzeichnet, dass** die Entscheidung über das Auslösen von Rückhaltemitteln unabhängig von den Messwerten des Drucksensors durchgeführt wird, wenn der Drucksensor als defekt erkannt worden ist.

5. Verfahren nach einem der Ansprüche 1 bis 4, wobei die Messwerte des Drucksensors mehrfach genutzt werden, insbesondere im Rahmen des Insassenschutzes, der Klimaregelung im Fahrzeuginnenraum und/oder einer Kfz-Wetterstation.

6. Verfahren nach einem der Ansprüche 1 bis 5, wobei die Messwerte des Drucksensors über ein Fahrer-Informationssystem angezeigt werden.

## Claims

1. Method for checking the operability of a pressure sensor which is used to detect a side impact and which senses the air pressure within a part of the bodywork of a vehicle, wherein the vehicle comprises at least one further pressure sensor for sensing the air pressure, **characterized in that** the measured values of the pressure sensor and the measured values of the at least one further pressure sensor are compared with one another over a defined observation time period, **in that** the pressure sensor is detected as being defective if its measured values deviate from the measured values of the at least one further pressure sensor beyond a predefined degree, and **in that** the checking takes place continuously.

2. Method for checking the operability of a pressure sensor which is arranged in a vehicle door and has the purpose of detecting the side impact according to Claim 1, **characterized in that** the further pressure sensor is arranged in another part of the vehicle bodywork.

3. Method according to Claim 2, **characterized in that** the further pressure sensor is arranged in a further vehicle door, on the same side of the vehicle or other side of the vehicle.

4. Method according to one of Claims 1 to 3, **characterized in that** the decision about the triggering of restraint means is carried out independently of the measured values of the pressure sensor if the pressure sensor has been detected as being defective.

5. Method according to one of Claims 1 to 4, wherein the measured values of the pressure sensor are used multiply, in particular within the scope of vehicle occupant protection, air-conditioning control in the passenger compartment of the vehicle and/or a motor vehicle weather station.

6. Method according to one of Claims 1 to 5, wherein the measured values of the pressure sensor are displayed by means of a driver information system.

## Revendications

1. Procédé de vérification du bon fonctionnement d'un détecteur de pression utilisé pour la détection d'une collision latérale et qui saisit la pression de l'air à l'intérieur d'une partie de la carrosserie d'un véhicule, le véhicule comprenant au moins un autre détecteur de pression qui saisit la pression de l'air, **caractérisé en ce que**
les valeurs de mesure du détecteur de pression et les valeurs de mesure du ou des autres détecteurs de pression sont comparées les unes aux autres pendant une durée d'examen définie,
**en ce que** le détecteur de pression est reconnu comme défectueux si ses valeurs de mesure s'écartent d'un niveau prédéterminé des valeurs de mesure du ou des autres détecteurs de pression et
**en ce que** la vérification s'effectue en continu.

2. Procédé de vérification du bon fonctionnement d'un détecteur de pression disposé dans la porte d'un véhicule, pour la détection d'une collision latérale selon la revendication 1, **caractérisé en ce que** l'autre détecteur de pression est disposé dans une autre partie de la carrosserie.

3. Procédé selon la revendication 2, **caractérisé en ce que** l'autre détecteur de pression est disposé dans une autre porte du véhicule située sur le même côté ou sur un autre côté du véhicule.

4. Procédé selon l'une des revendications 1 à 3, **caractérisé en ce que** lorsque le détecteur de pression a été reconnu comme défectueux, la décision concernant le déclenchement de moyens de retenue est exécutée indépendamment des valeurs de mesure du détecteur de pression.

5. Procédé selon l'une des revendications 1 à 4, dans lequel les valeurs de mesure du détecteur de pression sont utilisées plusieurs fois, en particulier pour la protection des passagers, pour la régulation de la climatisation de l'habitacle du véhicule et/ou pour une station météorologique de véhicule automobile.

6. Procédé selon l'une des revendications 1 à 5, dans lequel les valeurs de mesure du détecteur de pression sont affichées sur un système d'information du conducteur.
